# EUROPÄISCHE PATENTSCHRIFT

(11) **EP 2 035 728 B1**
(45) Veröffentlichungstag und Bekanntmachung des Hinweises auf die Patenterteilung: **21.07.2010**
(21) Anmeldenummer: 07786927.9
(22) Anmeldetag: 29.06.2007
(51) Int. Cl.: F16H 61/26, F16H 63/38

(54) **GETRIEBESCHALTVORRICHTUNG UND GETRIEBE MIT EINER SOLCHEN GETRIEBESCHALTVORRICHTUNG**
GEARBOX SHIFTING DEVICE AND GEARBOX COMPRISING A GEARBOX SHIFTING DEVICE OF THIS TYPE
DISPOSITIF DE PASSAGE DES RAPPORTS D'UNE TRANSMISSION ET TRANSMISSION COMPORTANT UN TEL DISPOSITIF DE PASSAGE DES RAPPORTS

(30) Priorität: 05.07.2006 DE 102006030997
(43) Veröffentlichungstag der Anmeldung: 18.03.2009
(73) Patentinhaber: ZF Friedrichshafen AG, 88038 Friedrichshafen (DE)
(72) Erfinder: REICHERT, Heinz, 88677 Markdorf (DE); MAIR, Ulrich, 88045 Friedrichshafen (DE); KURTH, Jörg, 88074 Meckenbeuren (DE)
(86) Internationale Anmeldenummer: PCT/EP2007/056553
(87) Internationale Veröffentlichungsnummer: WO 2008/003650

(56) Entgegenhaltungen:
- EP-A- 0 151 024
- DE-A1- 19 630 806
- DE-A1- 19 744 238
- DE-A1-102004 052 869

## Beschreibung

Die vorliegende Erfindung betrifft eine Getriebeschaltvorrichtung mit einer Wählwelle, einer drehfest mit der Wählwelle verbundenen Scheibe, in der eine scheibenseitige Führung vorgesehen ist, und einer der Scheibe gegenüberliegend angeordneten feststehenden Platte, in der eine plattenseitige Führung ausgebildet ist, wobei ein bewegliches Stellelement zum Verstellen eines Getriebes vorgesehen ist, das sich in die scheibenseitige und die plattenseitige Führung erstreckt. Des Weiteren betrifft die vorliegende Erfindung ein Getriebe mit einer solchen Getriebeschaltvorrichtung.

Aus dem Stand der Technik sind unterschiedliche Getriebeschaltvorrichtungen bekannt, die sowohl der Betätigung einer Parksperre als auch der Veränderung der Schaltposition eines Getriebes dienen. So beschreibt die DE 102004 052 869 A1 einen Parkbremsmechanismus für ein Getriebe. Der bekannte Parkbremsmechanismus umfasst einen Gangschalthebel, dessen Schwenkbewegung über eine Welle auf einen Rasthebel übertragen wird. Der Rasthebel weist an seinem Umfang eine Verzahnung auf, in die eine Rastfeder einrasten kann. An dem Rasthebel ist ferner eine Parkstange angelenkt, die durch Verschwenken des Rasthebels in Längsrichtung verschoben werden kann. Am Ende der Parkstange ist ein Nocken vorgesehen, der bei entsprechender Stellung des Rasthebels auf eine Parksperrklinke einwirkt, die daraufhin das Getriebe sperrt.

Eine ähnliche Vorrichtung ist auch in der DE 196 30 806 A1 offenbart, bei der eine über einen Wählhebel betätigbare Wählwelle beschrieben ist; wobei eine Rastenscheibe vorgesehen ist, die drehfest mit der Wählwelle verbunden ist. Zum Verrasten der Rastenscheibe ist ein Positionierelement vorgesehen, das über eine äußere Verzahnung der Rastenscheibe gleitet und in die Zahnlücken einrastbar ist. Zur Überwindung des Totpunktes an der höchsten Stelle eines einzelnen Zahnes ist eine Rolle an der Rastenscheibe vorgesehen, die nach außen über den Zahn hervorsteht und an der das Positionierelement abrollen kann.

In der EP 0 151 024 A2 wird eine Wählvorrichtung für ein stufenlos veränderliches Riemengetriebe für ein Fahrzeug offenbart. Die Wählvorrichtung umfasst einen Wählhebel und eine Nocken- oder Kulissenabtasteinrichtung, die eine Synchronisiereinrichtung mit Hilfe einer Gabel in Abhängigkeit von der durch den Wählhebel angewählten Stufe betätigt. Die Nocken- oder Kulissenanordnung ist an einer drehbaren Welle befestigt und weist einen ersten Abschnitt für eine Rückwärtsfahrstufe, einen zweiten Abschnitt für eine Fahrstufe und eine Hochdrehzahl-Fahrstufe und einen zwischen dem ersten und dem zweiten Abschnitt liegenden mittleren Abschnitt auf. Durch eine zweite Nocken- oder Kulissenanordnung wird eine Ventilanordnung betätigt, wenn die drehbare Welle in eine Position gedreht wird, die einer Hochdrehzahl-Fahrstufe entspricht.

Im Gegensatz zu dem zuvor genannten Stand der Technik beschreibt die DE 197 44 238 A1, welche als nächst Liegenden Stand der Technik angesehen werden kann und alle Merkmale des Oberbegrifts des Anspruchs 1 offenbart, einen Mechanismus, der nicht nur der Aktivierung einer Parksperre sondern auch dem Verstellen der Schaltposition eines Getriebes dient. Der bekannte Mechanismus umfasst einen Schalthebel, der drehfest mit einer Handsteuerungswelle verbunden ist. An der Handsteuerungswelle ist wiederum ein Plattenteil drehfest angeordnet, das an einem Umfangsabschnitt mit einer Verzahnung versehen ist, in die eine Arretierungsfeder eingreifen kann. In dem Plattenteil ist ein Schlitz vorgesehen, der sich in Umfangsrichtung des Plattenteils erstreckt und einen von einer Geraden abweichenden Verlauf aufweist. Dem Plattenteil gegenüberliegend ist ein so genanntes Reaktionstragteil vorgesehen, das ebenfalls plattenförmig ausgebildet und fest mit dem Gehäuse der Vorrichtung verbunden ist. In dem Reaktionstragteil ist ebenfalls ein Schlitz vorgesehen. Der bekannte Mechanismus weist weiterhin eine Stange auf, deren eines Ende in die Schlitze in dem Plattenteil und dem Reaktionstragteil ragt, während das andere Ende mit einem Getriebeventil des Getriebes verbunden ist. Dreht sich das Plattenteil, so folgt das eine Ende der Stange dem unregelmäßigen Weg innerhalb des Schlitzes in dem Plattenteil und bewirkt, dass sich das Getriebeventil hin- und herbewegt. Durch die Drehung des Plattenteils wird die Stellung des Getriebeventils und somit die Schaltposition des Getriebes verändert. Der Schlitz in dem Reaktionstragteil hat dabei die Funktion, die Bewegungsfreiheitsgrade der Stange einzuschränken.

Der bekannte Mechanismus ist jedoch mit einigen Nachteilen behaftet. Zum einen muss das drehbare Plattenteil sehr groß ausgeführt sein, damit dieses den sich in Umfangsrichtung erstreckenden Schlitz aufnehmen kann. Somit wird für den bekannten Mechanismus ein großer Bauraum benötigt. Zum anderen kann der bekannte Mechanismus nicht so leicht an unterschiedliche Fahrzeugschaltungen angepasst werden.

Der vorliegenden Erfindung liegt daher die Aufgabe zu Grunde, eine Getriebeschaltvorrichtung zu schaffen, die kompakt aufgebaut ist, wenig Bauraum benötigt und leicht an unterschiedliche Fahrzeugschaltungen angepasst werden kann. Der Erfindung liegt ferner die Aufgabe zu Grunde, ein Getriebe mit einer derart vorteilhaften Getriebeschaltvorrichtung zu schaffen.

Die Lösung dieser Aufgabe erfolgt anhand der in Patentanspruch 1 bzw. 17 angegebenen Merkmale. Vorteilhafte Ausführungsformen der Erfindung sind Gegenstand der Unteransprüche.

Die erfindungsgemäße Getriebeschaltvorrichtung weist eine Wählwelle auf. Mit der Wählwelle ist eine Scheibe drehfest verbunden, in der eine scheibenseitige Führung vorgesehen ist. Der Scheibe gegenüberliegend ist eine feststehende Platte angeordnet, in der eine plattenseitige Führung ausgebildet ist. Somit kann die Scheibe über die Wählwelle relativ zu der feststehenden Platte bewegt werden. Es ist ferner ein bewegliches Stellelement zum Verstellen eines Getriebes vorgesehen, das sich in die scheibenseitige und die plattenseitige Führung erstreckt. Bei dem beweglichen Stellelement kann es sich beispielsweise um eine Stellstange handeln, die einerseits zu dem Getriebe und andererseits in die genannten Führungen ragt. Die scheibenseitige Führung erstreckt sich in radialer Richtung der Scheibe.

Indem sich die scheibenseitige Führung in radialer Richtung der Scheibe erstreckt, kann die Scheibe sehr kompakt aufgebaut sein. Es ist im Gegensatz zum Stand der Technik nicht erforderlich, die Scheibe derart breit auszulegen, dass diese eine sich im Umfangsrichtung erstreckende Führung aufnehmen kann. Die Funktion der Auslenkung bzw. Bewegung des Stellelementes wird vielmehr von der plattenseitigen Führung in der feststehenden Platte übernommen, die einen entsprechend vorgegebenen Verlauf hat. So muss zwar die feststehende Platte entsprechend größer bzw. breiter dimensioniert sein, jedoch wird die feststehende Platte im Gegensatz zu der Scheibe nicht gedreht bzw. verschwenkt, so dass der benötigte Bauraum dadurch wesentlich kleiner ist. Darüber hinaus kann die erfindungsgemäße Getriebeschaltvorrichtung einfach an unterschiedliche Fahrzeugschaltungen angepasst werden, indem lediglich die feststehende Platte oder auch die Scheibe ausgetauscht wird.

In der erfindungsgemäßen Getriebeschaltvorrichtung weist die scheibenseitige Führung einen geradlinigen Verlauf auf. Hierdurch kann die Scheibe besonders kompakt ausgeführt sein.

Die scheibenseitige Führung der erfindungsgemäßen Getriebeschaltvorrichtung verläuft entlang einer Geraden, die sich durch die Drehachse der Wählwelle erstreckt. Bei dieser Konfiguration kann die Breite der Scheibe im Bereich der scheibenseitigen Führung besonders klein gewählt werden, so dass die Scheibe besonders kompakt aufgebaut ist. Die scheibenseitige Führung kann im Bedarfsfall jedoch auch von dieser Geraden winklig abweichen.

Um eine sichere Führung des Stellelementes innerhalb der scheibenseitigen und der plattenseitigen Führung zu gewährleisten, erstreckt sich die plattenseitige Führung in einer vorteilhaften Ausführungsform der erfindungsgemäßen Getriebeschaltvorrichtung unabhängig von der Drehstellung der Scheibe quer zur der scheibenseitigen Führung.

Damit die plattenseitige Führung die Auslenkung bzw. Bewegung des Stellelementes in Abhängigkeit von der Drehstellung der Scheibe bewirken kann, weist die plattenseitige Führung in einer weiteren vorteilhaften Ausführungsform der erfindungsgemäßen Getriebeschaltvorrichtung einen von einem geradlinigen Verlauf abweichenden Verlauf auf. So können sich beispielsweise mehrere gerade Abschnitte winklig aneinander anschließen, aber auch gekrümmte Verläufe der plattenseitigen Führung sind denkbar.

Um eine Getriebeschaltvorrichtung zur Verfügung stellen zu können, die eine besonders einfache und sichere Änderung der Schaltposition eines Getriebes ermöglicht, ist das Stellelement in einer weiteren vorteilhaften Ausführungsform der erfindungsgemäßen Getriebeschaltvorrichtung eine Stellstange zum Verstellen des Getriebeventils eines Automatikgetriebes.

In einer weiteren vorteilhaften Ausführungsform der erfindungsgemäßen Getriebeschaltvorrichtung weist die Stellstange ein stiftförmiges Ende auf, das sich in die scheibenseitige und die plattenseitige Führung erstreckt. Das stiftförmige Ende könnte beispielsweise abgewinkelt an der Stellstange angeordnet sein, um in die genannten Führungen zu ragen.

Um die feststehende Anordnung der Platte gegenüber der Scheibe zu ermöglichen, ist in einer weiteren bevorzugten Ausführungsform der erfindungsgemäßen Getriebeschaltvorrichtung ein Gehäuse zur Aufnahme der Scheibe und zumindest eines Teils der Wählwelle vorgesehen, wobei die Platte an dem Gehäuse befestigt ist. Bei dem Gehäuse könnte es sich beispielsweise auch um das Gehäuse des Getriebes selbst handeln.

Um die Anpassung der Getriebeschaltvorrichtung an unterschiedliche Fahrzeugschaltungen schnell durchführen zu können, ist die Platte in einer weiteren bevorzugten Ausführungsform der erfindungsgemäßen Getriebeschaltvorrichtung lösbar an dem Gehäuse befestigt. Die lösbare Befestigung ist vorzugsweise mit Hilfe von Schrauben realisiert. Um die Getriebeschaltvorrichtung an eine andere Fahrzeugschaltung anzupassen, muss lediglich die Platte durch eine Platte mit einer anderen plattenseitigen Führung ersetzt werden.

In einer weiteren vorteilhaften Ausführungsform der erfindungsgemäßen Getriebeschaltvorrichtung ist ein Wählhebel zum Drehen der Wählwelle vorgesehen, der außerhalb des Gehäuses angeordnet ist. Hierbei kann es sich um einen aus Kraftfahrzeugen bekannten Schalthebel handeln.

Um die Austauschbarkeit der feststehenden Platte weiter zu vereinfachen, ist diese in einer weiteren vorteilhaften Ausführungsform der erfindungsgemäßen Getriebeschaltvorrichtung außen an dem Gehäuse angeordnet. Die Platte ist vorzugsweise neben dem Wählhebel angeordnet.

Gemäß einer weiteren vorteilhaften Ausführungsform der erfindungsgemäßen Getriebeschaltvorrichtung ist die Scheibe als Rastenscheibe mit Erhebungen und dazwischenlegenden Senken ausgebildet. Es sind demzufolge keine zwei Scheiben erforderlich, vielmehr wird sowohl die Führungsfunktion als auch die Rastfunktion von der Rastenscheibe wahrgenommen, so dass ein kleinerer Bauraum erforderlich ist.

Um ein Verrasten der Rastenscheibe in vorbestimmten Drehstellungen zu ermöglichen, ist in einer weiteren vorteilhaften Ausführungsform der erfindungsgemäßen Getriebeschaltvorrichtung ein feststehendes Rastelement vorgesehen, das in die Senken einrastbar ist. Hierbei kann es sich um die aus dem Stand der Technik bekannten Positionier-, Rast- oder Arretierungselemente handeln. Das Rastelement kann beispielsweise an dem Gehäuse befestigt sein, damit dieses gegenüber der Rastenscheibe feststehend angeordnet ist.

In einer besonders bevorzugten Ausführungsform der erfindungsgemäßen Getriebeschaltvorrichtung ist die scheibenseitige Führung auf der den Erhebungen und Senken gegenüberliegenden Seite der Rastenscheibe angeordnet. Durch diese Verlagerung auf die sich gegenüberliegenden Seiten der Rastenscheibe kann ein geringerer Durchmesser der Rastenscheibe erzielt werden, da die Führung und die Erhebungen bzw. Senken nicht hintereinander auf einer Seite angeordnet werden müssen. Dies führt zu einer kleineren Rastenscheibe und einem kompakteren Aufbau der Getriebeschaltvorrichtung.

In einer weiteren vorteilhaften Ausführungsform der erfindungsgemäßen Getriebeschaltvorrichtung sind die scheibenseitigen und plattenseitigen Führungen als Führungsschlitze ausgebildet. So kann sich das Stellelement von einer Seite durch die eine Führung bis in die dahinter angeordnete andere Führung erstrecken.

Damit die Getriebeschaltvorrichtung auch die Aktivierung einer Parksperre ermöglicht, ist in einer weiteren bevorzugten Ausführungsform der erfindungsgemäßen Getriebeschaltvorrichtung eine zweite scheibenseitige Führung und eine zweite plattenseitige Führung vorgesehen, wobei die Getriebeschaltvorrichtung ferner ein zweites Stellelement zum Verstellen einer Parksperre aufweist, das sich in die zweite scheibenseitige und die zweite plattenseitige Führung erstreckt Für die zweite scheibenseitige Führung, die zweite plattenseitige Führung und das zweite Stellelement gelten die zuvor beschriebenen Merkmale entsprechend.

Das erfindungsgemäße Getriebe, bei dem es sich vorzugsweise um ein Automatikgetriebe handelt, weist die erfindungsgemäße Getriebeschaltvorrichtung der vorstehend beschriebenen Art auf.

Die Erfindung wird im Folgenden anhand einer beispielhaften Ausführungsform unter Bezugnahme auf die zugehörigen Zeichnungen näher erläutert.

Es zeigen:
- Fig. 1: eine Vorderansicht einer Ausführungsform der erfindungs- gemäßen Getriebeschaltvorrichtung in geschnittener Dar- stellung und
- Fig. 2: eine Draufsicht auf die Schnittlinie A-A von Fig. 1.

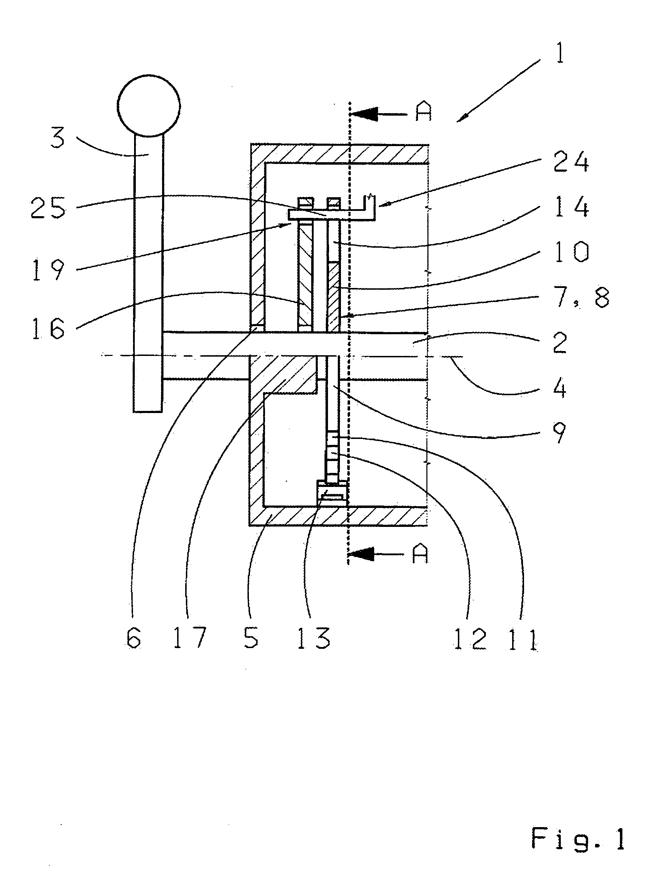

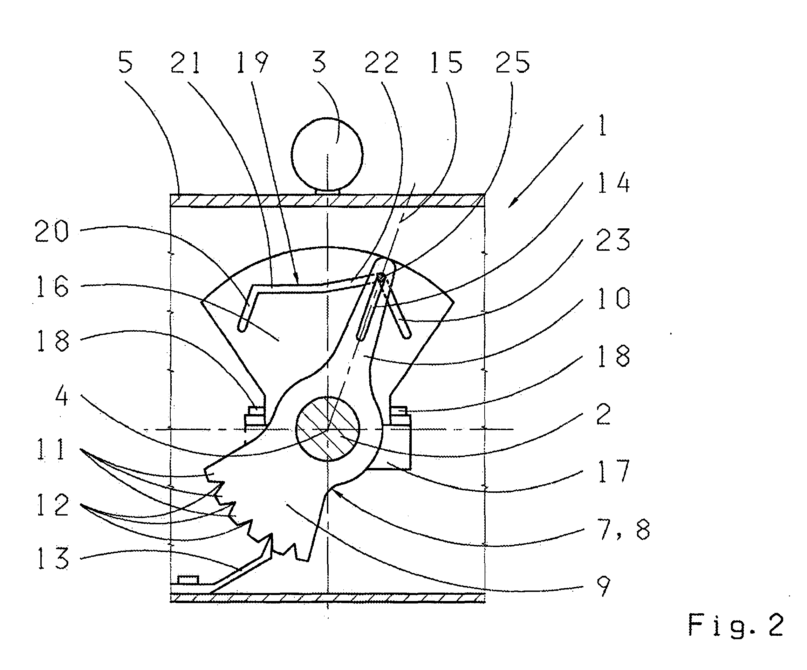

Die Fig. 1 und 2 zeigen eine Ausführungsform der Getriebeschaltvorrichtung 1 für ein Automatikgetriebe (nicht dargestellt). Die Getriebeschaltvorrichtung 1 weist eine Wählwelle 2 auf. Die Wählwelle 2 ist drehfest mit einem Wählhebel 3 verbunden, mit dessen Hilfe die Wählwelle 2 um eine Drehachse 4 gedreht werden kann. Die Getriebeschaltvorrichtung 1 umfasst ferner ein Gehäuse 5, wobei sich die Wählwelle 2 ausgehend von dem Wählhebel, der außerhalb des Gehäuses 5 angeordnet ist, durch eine Öffnung 6 in das Gehäuse 5 erstreckt. Das Gehäuse 5 kann als Teil des Getriebegehäuses ausgebildet sein.

Innerhalb des Gehäuses 5 ist eine Scheibe 7 drehfest mit der Wählwelle 2 verbunden, wobei sich die Scheibe 7 rechtwinklig zu der Drehachse 4 der Wählwelle 2 erstreckt. Die Scheibe 7 ist in der dargestellten Ausführungsform als so genannte Rastenscheibe 8 ausgebildet und umfasst einen ersten Scheibenabschnitt 9 und einen zweiten Scheibenabschnitt 10. Die beiden Scheibenabschnitte 9, 10 erstrecken sich radial nach außen in entgegengesetzter Richtung und sind somit bezogen auf die Drehachse 4 der Wählwelle 2 auf gegenüberliegenden Seiten der Rastenscheibe 8 ausgebildet.

An dem radial nach außen weisenden Rand des ersten Scheibenabschnitts 9 sind mehrere Erhebungen 11 mit dazwischenliegenden Senken 12 ausgebildet. In die Senken 12 ist ein gegen den radial nach außen weisenden Rand des ersten Scheibenabschnitts 9 vorgespanntes Rastelement 13 einrastbar, das an dem Gehäuse 5 befestigt und somit feststehend gegenüber der Rastenscheibe 8 angeordnet ist. Je nach Drehstellung der Rastenscheibe 8 kann das Rastelement 13 in die unterschiedlichen Senken 12 einrasten und die Rastenscheibe 8 in der entsprechenden Stellung verrasten.

In dem zweiten Scheibenabschnitt 10, der auf der dem ersten Scheibenabschnitt 9 gegenüberliegenden Seite angeordnet ist, ist eine scheibenseitige Führung 14 ausgebildet. Die scheibenseitige Führung 14 ist als Führungsschlitz ausgebildet und erstreckt sich in radialer Richtung der Rastenscheibe 8. Dabei weist die scheibenseitige Führung 14 einen geradlinigen Verlauf auf und erstreckt sich entlang einer radial verlaufenden Geraden 15, die sich durch die Drehachse 4 der Wählwelle 2 erstreckt, wie dies insbesondere in Fig. 2 zu erkennen ist.

In Richtung der Drehachse 4 der Wählwelle 2 ist eine der Rastenscheibe 8 gegenüberliegende feststehende Platte 16 angeordnet, die insbesondere gegenüber dem zweiten Scheibenabschnitt 10 der Rastenscheibe 8 angeordnet ist. Die Platte 16 ist innerhalb des Gehäuses 5 an einem Vorsprung 17 desselben mit Schrauben 18 lösbar befestigt, so dass eine Relativbewegung zwischen der Rastenscheibe 8 und der Platte 16 möglich ist, wenn die Wählwelle 2 mitsamt der Rastenscheibe 8 gedreht wird. In der Platte 16, die sich parallel zu der Rastenscheibe 8 erstreckt, ist eine plattenseitige Führung 19 in Form eines Führungsschlitzes ausgebildet. Die plattenseitige Führung 19 umfasst mehrere geradlinige Führungsabschnitte 20, 21, 22, 23, die hintereinanderliegend und winklig zueinander angeordnet sind, so dass die plattenseitige Führung 19 einen von einem geradlinigen Verlauf abweichenden Verlauf aufweist. Der Verlauf der plattenseitigen Führung 19 ist dabei derart gewählt, dass sich die plattenseitige Führung 19 unabhängig von der Drehstellung der Rastenscheibe 8 stets quer zu der scheibenseitigen Führung 14 erstreckt, wie dies insbesondere in Fig. 2 zu sehen ist.

Die Getriebeschaltvorrichtung 1 weist ferner ein Stellelement 24 zum Verstellen des Getriebes auf, das in Fig. 1 lediglich teilweise dargestellt ist. Das Stellelement 24 ist als Stellstange ausgebildet, die dem Verstellen eines Getriebeventils (nicht dargestellt) des Automatikgetriebes dient, wobei durch Verstellen des Getriebeventils die Schaltposition des Automatikgetriebes geändert wird. Das Stellelement 24 bzw. die Stellstange weist ein stiftförmiges Ende 25 auf, das sich durch die scheibenseitige Führung 14 und die plattenseitige Führung 19 erstreckt.

Nachstehend wird die Funktionsweise der dargestellten Getriebeschaltvorrichtung 1 erläutert. Wird der Wählhebel 3 verschwenkt, so dreht sich die Wählwelle 2 und die daran angeordnete Rastenscheibe 8 um die Drehachse 4. Das stiftförmige Ende 25 des Stellelements 24 liegt in der scheibenseitigen Führung 14 ein und wird daher durch die Rastenscheibe 8 verschwenkt, wobei das stiftförmige Ende 25 entlang der plattenseitigen Führung 19 geführt wird. Aufgrund des von einem geradlinigen Verlauf abweichenden Verlaufs der plattenseitigen Führung 19 wird das stiftförmige Ende 25 entsprechend ausgelenkt, wobei es in der scheibenseitigen Führung 14 radial geführt ist. Diese Auslenkung wird über das Stellelement 24 bzw. die Stellstange auf das Getriebeventil (nicht dargestellt) übertragen, das daraufhin verstellt wird.

Dank der radialen, geradlinigen Ausrichtung der scheibenseitigen Führung 14, kann die Scheibe sehr kompakt aufgebaut sein. Die Funktion der Auslenkung des Stellelements 24 wird von der plattenseitigen Führung 19 in der feststehenden Platte 16 übernommen. Des Weiteren kann die Getriebeschaltvorrichtung 1 einfach an unterschiedliche Fahrzeugschaltungen angepasst werden, indem lediglich die feststehende Platte 16 oder auch die Rastenscheibe 8 ausgetauscht wird.

Um die Anpassung der Getriebeschaltvorrichtung 1 an unterschiedliche Fahrzeugschaltungen weiter zu vereinfachen, ist die feststehende Platte 16 in einer weiteren Ausführungsform, die der beschriebenen Ausführungsform ähnelt, außen an dem Gehäuse 5, vorzugsweise neben dem Wählhebel 3, befestigt.

Damit die Getriebeschaltvorrichtung auch die Aktivierung einer Parksperre ermöglichen kann, ist in einer weiteren bevorzugten Ausführungsform der Getriebeschaltvorrichtung 1 eine zweite scheibenseitige Führung und eine zweite plattenseitige Führung vorgesehen, wobei die Getriebeschaltvorrichtung 1 ferner ein zweites Stellelement zum Verstellen einer Parksperre aufweist, das sich in die zweite scheibenseitige und die zweite plattenseitige Führung erstreckt. Für die zweite scheibenseitige Führung, die zweite plattenseitige Führung und das zweite Stellelement, die in den Figuren aus Gründen der Übersichtlichkeit nicht dargestellt sind, gelten die zuvor beschriebenen Merkmale entsprechend.

### Bezugszeichen

- 1: Getriebeschaltvorrichtung
- 2: Wählwelle
- 3: Wählhebel
- 4: Drehachse
- 5: Gehäuse
- 6: Öffnung
- 7: Scheibe
- 8: Rastenscheibe
- 9: erster Scheibehabschnitt
- 10: zweiter Scheibenabschnitt
- 11: Erhebungen
- 12: Senken
- 13: Rastelement
- 14: scheibenseitige Führung
- 15: Gerade
- 16: feststehende Platte
- 17: Vorsprung
- 18: Schrauben
- 19: plattenseitige Führung
- 20: Führungsabschnitt
- 21: Führungsabschnitt
- 22: Führungsabschnitt
- 23: Führungsabschnitt
- 24: Stellelement/Stellstange
- 25: stiftförmiges Ende

## Patentansprüche

1. Getriebeschaltvorrichtung mit einer Wählwelle (2), einer drehfest mit der Wählwelle (2) verbundenen Scheibe (7), in der eine scheibenseitige Führung (14) vorgesehen ist, und einer der Scheibe (7) gegenüberliegend angeordneten feststehenden Platte (16), in der eine plattenseitige Führung (19) ausgebildet ist, wobei ein bewegliches Stellelement (24) zum Verstellen eines Getriebes vorgesehen ist, das sich in die scheibenseitige und die plattenseitige Führung (14, 19) erstreckt, wobei sich die scheibenseitige Führung (14) in radialer Richtung der Scheibe (7) erstreckt und einen geradlinigen Verlauf aufweist, **dadurch gekennzeichnet, dass** die scheibenseitige Führung (14) entlang einer Geraden (15) verläuft, die sich durch die Drehachse (4) der Wählwelle (2) erstreckt.

2. Getriebeschaltvorrichtung nach Anspruch 1, **dadurch gekennzeichnet, dass** die scheibenseitige Führung (14) gegenüber der Geraden (15) winklig abweicht.

3. Getriebeschaltvorrichtung nach Anspruch 1 oder 2, **dadurch gekennzeichnet, dass** sich die plattenseitige Führung (19) unabhängig von der Drehstellung der Scheibe (7) quer zur der scheibenseitigen Führung (14) erstreckt.

4. Getriebeschaltvorrichtung nach einem der vorangehenden Ansprüche, **dadurch gekennzeichnet, dass** die plattenseitige Führung (19) einen von einem geradlinigen Verlauf abweichenden Verlauf aufweist.

5. Getriebeschaltvorrichtung nach einem der vorangehenden Ansprüche, **dadurch gekennzeichnet, dass** das Stellelement (24) eine Stellstange zum Verstellen des Getriebeventils eines Automatikgetriebes ist.

6. Getriebeschaltvorrichtung nach Anspruch 5, **dadurch gekennzeichnet, dass** die Stellstange ein stiftförmiges Ende (25) aufweist, das sich in die scheibenseitige und die plattenseitige Führung (14, 19) erstreckt.

7. Getriebeschaltvorrichtung nach einem der vorangehenden Ansprüche, **dadurch gekennzeichnet, dass** ein Gehäuse (5) zur Aufnahme der Scheibe (7) und zumindest eines Teils der Wählwelle (2) vorgesehen ist, wobei die Platte (16) an dem Gehäuse (5) befestigt ist.

8. Getriebeschaltvorrichtung nach Anspruch 7, **dadurch gekennzeichnet, dass** die Platte (16) lösbar, vorzugsweise durch Schrauben (18), an dem Gehäuse (5) befestigt ist.

9. Getriebeschaltvorrichtung nach einem der Ansprüche 7 oder 8, **dadurch gekennzeichnet, dass** ein Wählhebel (3) zum Drehen der Wählwelle (2) vorgesehen ist, der außerhalb des Gehäuses (5) angeordnet ist.

10. Getriebeschaltvorrichtung nach einem der Ansprüche 7 bis 9, **dadurch gekennzeichnet, dass** die Platte (16) außen an dem Gehäuse (5), vorzugsweise neben dem Wählhebel (3), angeordnet ist.

11. Getriebeschaltvorrichtung nach einem der vorangehenden Ansprüche, **dadurch gekennzeichnet, dass** die Scheibe (7) als Rastenscheibe (8) mit Erhebungen (11) und dazwischenliegenden Senken (12) ausgebildet ist.

12. Getriebeschaltvorrichtung nach Anspruch 11, **dadurch gekennzeichnet, dass** ein feststehendes Rastelement (13) vorgesehen ist, das in die Senken (12) einrastbar ist.

13. Getriebeschaltvorrichtung nach einem der Ansprüche 11 oder 12, **dadurch gekennzeichnet, dass** die scheibenseitige Führung (14) auf der den Erhebungen (11) und Senken (12) gegenüberliegenden Seite der Rastenscheibe (8) angeordnet ist.

14. Getriebeschaltvorrichtung nach einem der vorangehenden Ansprüche, **dadurch gekennzeichnet, dass** die scheibenseitigen und plattenseitigen Führungen (14, 19) als Führungsschlitze ausgebildet sind.

15. Getriebeschaltvorrichtung nach einem der vorangehenden Ansprüche, **dadurch gekennzeichnet, dass** eine zweite scheibenseitige Führung und eine zweite plattenseitige Führung vorgesehen ist, wobei die Getriebeschaltvorrichtung (1) ferner ein zweites Stellelement zum Verstellen einer Parksperre aufweist, das sich in die zweite scheibenseitige und die zweite plattenseitige Führung erstreckt.

16. Getriebe, vorzugsweise Automatikgetriebe, mit einer Getriebeschaltvorrichtung (1) nach einem der vorangehenden Ansprüche.

## Claims

1. Gearbox shifting device having a selector shaft (2), having a disc (7) which is rotationally fixedly connected to the selector shaft (2) and in which a disc-side guide (14) is provided, and having a stationary plate (16) which is arranged opposite the disc (7) and in which a plate-side guide (19) is formed, with a movable actuating element (24) being provided for adjusting a gearbox, which actuating element (24) extends into the disc-side and plate-side guides (14, 19), with the disc-side guide (14) extending in the radial direction of the disc (7) and having a rectilinear profile, **characterized in that** the disc-side guide (15) runs along a straight line (15) which extends through the rotational axis (4) of the selector shaft (2).

2. Gearbox shifting device according to Claim 1, **characterized in that** the disc-side guide (14) deviates from the straight line (15) at an angle.

3. Gearbox shifting device according to Claim 1 or 2, **characterized in that** the plate-side guide (19) extends transversely with respect to the disc-side guide (14) regardless of the rotational position of the disc (7).

4. Gearbox shifting device according to one of the preceding claims, **characterized in that** the plate-side guide (19) has a profile which differs from a rectilinear profile.

5. Gearbox shifting device according to one of the preceding claims, **characterized in that** the actuating element (24) is an actuating rod for adjusting the gearbox valve of an automatic gearbox.

6. Gearbox shifting device according to Claim 5, **characterized in that** the actuating rod has a pin-shaped end (25) which extends into the disc-shaped and plate-shaped guides (14, 19).

7. Gearbox shifting device according to one of the preceding claims, **characterized in that** a housing (5) is provided for holding the disc (7) and at least a part of the selector shaft (2), with the plate (16) being fastened to the housing (5).

8. Gearbox shifting device according to Claim 7, **characterized in that** the plate (16) is releasably fastened to the housing (5), preferably by means of screws (18).

9. Gearbox shifting device according to one of Claims 7 or 8, **characterized in that** a selector lever (3) is provided for rotating the selector shaft (2), which selector lever (3) is arranged outside the housing (5).

10. Gearbox shifting device according to one of Claims 7 to 9, **characterized in that** the plate (16) is arranged at the outside on the housing (5), preferably adjacent to the selector lever (3).

11. Gearbox shifting device according to one of the preceding claims, **characterized in that** the disc (7) is formed as a detent disc (8) with elevations (11) and interposed depressions (12).

12. Gearbox shifting device according to Claim 11, **characterized in that** a stationary detent element (13) is provided which can latch into the depressions (12).

13. Gearbox shifting device according to one of Claims 11 or 12, **characterized in that** the disc-shaped guide (14) is arranged on that side of the detent disc (8) which is situated opposite the elevations (11) and depressions (12).

14. Gearbox shifting device according to one of the preceding claims, **characterized in that** the disc-side and plate-side guides (14, 19) are designed as guide slots.

15. Gearbox shifting device according to one of the preceding claims, **characterized in that** a second disc-shaped guide and a second plate-side guide are provided, with the gearbox shifting device (1) also having a second actuating element for adjusting a parking lock, which second actuating element extends into the second disc-side guide and into the second plate-side guide.

16. Gearbox, preferably automatic gearbox, having a gearbox shifting device (1) according to one of the preceding claims.

## Revendications

1. Dispositif de passage des rapports d'une transmission comprenant un arbre de sélection (2), un disque (7) connecté de manière solidaire en rotation à l'arbre de sélection (2), dans lequel est prévu un guide (14) du côté du disque, et une plaque (16) fixe disposée en face du disque (7), dans laquelle est réalisé un guide (19) du côté de la plaque, un élément de commande mobile (24) pour régler une transmission étant prévu, lequel s'étend dans le guide du côté du disque et le guide du côté de la plaque (14, 19), le guide du côté du disque (14) s'étendant dans la direction radiale du disque (7) et présentant une allure rectiligne, **caractérisé en ce que** le guide du côté du disque (14) s'étend le long d'une droite (15) qui s'étend à travers l'axe de rotation (4) de l'arbre de sélection (2).

2. Dispositif de passage des rapports d'une transmission selon la revendication 1, **caractérisé en ce que** le guide du côté du disque (14) s'écarte d'un certain angle de la droite (15).

3. Dispositif de passage des rapports d'une transmission selon la revendication 1 ou 2, **caractérisé en ce que** le guide du côté de la plaque (19) s'étend indépendamment de la position de rotation du disque (7) transversalement au guide du côté du disque (14).

4. Dispositif de passage des rapports d'une transmission selon l'une quelconque des revendications précédentes, **caractérisé en ce que** le guide du côté de la plaque (19) présente une allure s'écartant d'une allure rectiligne.

5. Dispositif de passage des rapports d'une transmission selon l'une quelconque des revendications précédentes, **caractérisé en ce que** l'élément de commande (24) est une tige de commande pour le réglage de la soupape de transmission d'une transmission automatique.

6. Dispositif de passage des rapports d'une transmission selon la revendication 5, **caractérisé en ce que** la tige de commande présente une extrémité en forme de goupille (25), qui s'étend dans le guide du côté du disque et le guide du côté de la plaque (14, 19).

7. Dispositif de passage des rapports d'une transmission selon l'une quelconque des revendications précédentes, **caractérisé en ce qu'**un boîtier (5) pour recevoir le disque (7) et au moins une partie de l'arbre de sélection (2) est prévu, la plaque (16) étant fixée au boîtier (5).

8. Dispositif de passage des rapports d'une transmission selon la revendication 7, **caractérisé en ce que** la plaque (16) est fixée de manière amovible, de préférence par des vis (18), sur le boîtier (5).

9. Dispositif de passage des rapports d'une transmission selon l'une quelconque des revendications 7 ou 8, **caractérisé en ce qu'**un levier de sélection (3) est prévu pour faire tourner l'arbre de sélection (2), et est disposé en dehors du boîtier (5).

10. Dispositif de passage des rapports d'une transmission selon l'une quelconque des revendications 7 à 9, **caractérisé en ce que** la plaque (16) est disposée à l'extérieur sur le boîtier (5), de préférence à côté du levier de sélection (3).

11. Dispositif de passage des rapports d'une transmission selon l'une quelconque des revendications précédentes, **caractérisé en ce que** le disque (7) est réalisé sous forme de disque d'encliquetage (8) avec des rehaussements (11) et des creux intermédiaires (12).

12. Dispositif de passage des rapports d'une transmission selon la revendication 11, **caractérisé en ce qu'**un élément d'encliquetage fixe (13) est prévu, lequel peut s'encliqueter dans les creux (12).

13. Dispositif de passage des rapports d'une transmission selon l'une quelconque des revendications 11 ou 12, **caractérisé en ce que** le guide du côté du disque (14) est disposé du côté du disque d'encliquetage (8) opposé aux rehaussements (11) et aux creux (12).

14. Dispositif de passage des rapports d'une transmission selon l'une quelconque des revendications précédentes, **caractérisé en ce que** les guides du côté du disque et du côté de la plaque (14, 19) sont réalisés sous forme de fentes de guidage.

15. Dispositif de passage des rapports d'une transmission selon l'une quelconque des revendications précédentes, **caractérisé en ce qu'**un deuxième guidage du côté du disque et un deuxième guidage du côté de la plaque sont prévus, le dispositif de passage des rapports de la transmission (1) présentant en outre un deuxième élément de commande pour régler un frein de stationnement, qui s'étend dans le deuxième guide du côté du disque et le deuxième guide du côté de la plaque.

16. Transmission, de préférence transmission automatique, comprenant un dispositif de passage des rapports de transmission (1) selon l'une quelconque des revendications précédentes.
